# EUROPÄISCHE PATENTANMELDUNG

(11) **EP 1 650 899 A1**
(43) Veröffentlichungstag der Anmeldung: **26.04.2006**
(21) Anmeldenummer: 04024945.0
(22) Anmeldetag: 20.10.2004
(51) Int. Cl.: H04L 12/26, H04Q 7/34

(54) **Verfahren und Einrichtung zum Testen einer Applikation für ein Telekommunikationengerät**

(71) Anmelder: Setcom Wireless Products GmbH, 81671 München (DE)
(72) Erfinder: Sprenger, Christian, 81667 München (DE)
(74) Vertreter: Meissner, Bolte & Partner

(57) **Zusammenfassung**

Verfahren zum Testen einer Applikation für ein Telekommunikationsendgerät (14,15), insbesondere ein Mobilfunkendgerät, bei dem in einer Applikations-Testeinrichtung (12) zu Testzwecken eine Applikations-Testnachricht gemäß applikationsspezifischen Protokollen erzeugt wird, und diese über ein LAN/WAN (16) an eine Telekommunikationsendgerät-Testeinrichtung (18,20) übermittelt wird, welche die Applikations-Testnachricht über eine Telekommunikations-Datenübermittlungsverbindung (24,26) an eine Applikationsumgebung (14,15) übermittelt, in welche die Applikation eingebettet ist.

## Beschreibung

Die Erfindung betrifft ein Verfahren zum Testen einer Applikation für ein Telekommunikationsendgerät, insbesondere ein Mobilfunkendgerät, sowie eine entsprechende Applikations-Testeinrichtung.

Für alle Zwecke der Telekommunikation stehen dem Benutzer heutzutage eine Vielzahl von unterschiedlichen Telekommunikations(TK)-Endgeräten zur Verfügung. Hierzu gehören neben den klassischen, analogen oder digitalen Festnetztelefonen auch Mobilfunkendgeräte unterschiedlichster Ausführung für Mobilfunknetze der zweiten/dritten Generation (GSM, GPRS, EDGE, CDMA, etc.). Als TK-Endgeräte werden nachfolgend aber auch weitere, kommunikationsfähige Endgeräte wie beispielsweise PDAs, Blackberries oder auch Notebooks mit Mobilfunkkarte angesehen, auf denen telekommunikationstypische Applikationen lauffähig sind.

In der klassischen Festnetzwelt gibt es zur Unterstützung der Sprachkommunikation eine begrenzte Anzahl von Zusatzdiensten, die sogenannten "Supplementary Services". Diese betreffen etwa die Anzeige oder Unterdrückung der Nummer des rufenden/angerufenen Teilnehmers oder die Rufweiterleitung. Die Konvergenz klassischer Telekommunikationsnetze mit auf der Internet-Technologie basierenden Paketdatennetzen für die Datenkommunikation führt bei den Telekommunikationsnetzen zu einer rasch wachsenden Vielzahl neuer Anwendungsmöglichkeiten für den Teilnehmer bzw. Benutzer.

Diese neuen Anwendungen oder Applikationen gehen über die reine Sprachkommunikation weit hinaus. So kann der Besitzer eines modernen Mobilfunkendgerätes neben SMS-Textnachrichten auch Bilder über einen "Multimedia Messaging Service" (MMS) versenden bzw. empfangen. Er kann ebenso auch E-Mails versenden/empfangen, sich neben Klingeltönen ganze Musikstücke herunterladen sowie sein Endgerät wie ein Walkie-Talkie oder dergleichen analoges Sprechfunkgerät verwenden, wenn er den Dienst "Push to talk over Cellular" (PoC) verwendet. Bei Musikstücken, aber auch Programmen, dergleichen abspiel- bzw. ablauffähigen Daten und allgemein bei Daten, die urheberrechtlichem Schutz unterliegen, wird in der Zukunft die Einhaltung der Nutzungskonditionen durch die Implementierung von "Digital Rights Management" (DRM) auf TK-Endgeräten wie Mobilfunkendgeräten von großer Bedeutung sein.

Meist werden Dienste wie die vorstehend beispielhaft aufgezählten in Form eines Client-Server-Modells realisiert. Dabei befindet sich ein Server entweder im Netz des Telekommunikationsbetreibers oder außerhalb von diesem. Auf dem Endgerät ist eine Client-Software (nachfolgend gelegentlich verkürzend ebenfalls als "Applikation" bezeichnet) installiert. Zum Herunterladen beispielsweise von E-Mails sendet die Client-Anwendung auf dem Endgerät eine entsprechende Anforderungsnachricht über das Telekommunikationsnetz an den Applikationsserver. Dieser reagiert darauf, indem er die für den Benutzer des Endgerätes bestimmten E-Mails über das Netz zurück an den Client auf dem Endgerät sendet.

Für die Installation von Applikationen verfügen beispielsweise moderne Mobilfunkendgeräte über Laufzeitumgebungen, wie etwa die J2EE-Laufzeitumgebung, so dass Javabasierte Applikationen ablauffähig sind. Die Client-Software kann vor der Auslieferung des Endgerätes an den Kunden installiert werden oder durch den Kunden selbst. Letzteres ist jederzeit möglich, indem der Benutzer etwa eine bestimmte WAP-Adresse ansteuert, von der die Client-Software heruntergeladen werden kann. Die Applikation kann sich nach dem Herunterladen automatisch installieren. Somit ist es leicht möglich, die Funktionalitäten bzw. den Nutzen eines Endgerätes nach dessen Auslieferung an den Kunden zu verbessern bzw. zu erhöhen, indem neue Anwendungen nachträglich entwickelt und/oder auf das Endgerät heruntergeladen werden.

Durch die ständig weiter steigende Vielfalt an Applikationen für Mobilfunkendgeräte, die so aber im Prinzip durchaus auch für Festnetztelefone denkbar ist (etwa IP-Telefone); wachsen die Anforderungen der Endkunden und der Netzbetreiber an die Zuverlässigkeit der Applikationen, sowohl was deren eigentliche Funktionalität als auch ihr Zusammenwirken mit Endgerät und Netz angeht. So ist es beispielsweise nicht hinnehmbar, dass eine fehlerhaft entwickelte Streaming-Video-Anwendung zur Darstellung einer Sequenz von Bildern, die kontinuierlich von einem entsprechenden Server heruntergeladen werden, aufgrund von Störungen in der Übertragung zum Absturz eines Mobilfunkendgerätes führt. Mit Störungen muss aber bei der Datenübertragung über die Luftschnittstelle eines Mobilfunknetzes gerechnet werden.

In gleicher Weise wie Telekommunikationsendgeräte vor der Auslieferung an den Kunden getestet werden, müssen auch Applikationen für derartige Endgeräte getestet werden, und dieser Bereich erlangt immer größere Bedeutung, wie nach dem oben gesagten verständlich ist.

Aus dem Bereich der Softwareentwicklung für Telekommunikationsendgeräte sind unterschiedliche Testverfahren bekannt, wie etwa Modultests, Funktionstests, Systemtests, Conformance-Tests, Acceptance-Tests, Regressions-Tests, etc. Diese sind sowohl für die Verifikation der grundlegenden Funktionalitäten eines Endgerätes als auch für die Verifikation von Applikationen anzuwenden, die auf vorgegebenen Endgeräten bzw. Laufzeitumgebungen ablauffähig sein sollen.

Für den Test von Applikationen für mobile Clients existieren vorgegebene Testfall-Ensembles, die beispielsweise von der GCF ("Global Certification Forum") oder der PTCRB ("PCS 1900 Type Certification Review Board") oder der OMA ("Open Mobile Alliance") vorgegeben werden. Darüber hinaus kann natürlich der Netzbetreiber weitere Tests vom Hersteller des Endgerätes / der Applikation verlangen oder selbstdefinierte Tests eigenständig entwickeln und durchführen.

Während die Testinhalte so zumindest teilweise vorgegeben sind, gilt dies für die Testdurchführung bzw. Testplattform nicht. Nur die Software, die zur Durchführung von Applikationstests benötigt wird, wird von den oben genannten Gremien validiert und zertifiziert.

Für die praktische Durchführung eines Tests sind unterschiedliche Verfahren bekannt. Im einfachsten Falle liegt die zu testende Applikation auf einem Endgerät vor und es wird die Funktionalität der Applikation in einem realen Netzwerk (einem "life network") oder einem für Testzwecke aufgebauten, jedoch mit real vorhandenen Netzeinrichtungen getestet. Entsprechende Tests werden durchgeführt, indem entweder die Applikation auf dem Endgerät ausgewählt und gemäß den Vorgaben des Testfalles bedient wird, oder indem die Applikation von weiteren Einrichtungen über das Netz angestoßen wird (bspw. einem weiteren Endgerät). Die Ergebnisse derartiger Testfälle sind von Hand zu notieren. Derartige Tests sind aufwändig und für viele Zwecke nicht ausreichend, beispielsweise zum Testen von Fehlerfällen, um die Fehlertoleranz bzw. -stabilität der Applikation / des Endgerätes zu testen.

Die Netzknoten (wie SGSN, BSC/PCU etc.) der in dem realen bzw. zu Testzwecken verwendeten Telekommunikationsnetz werden nachfolgend mit dem Begriff der Telekommunikations-Testeinrichtung bezeichnet, insoweit diese für die weiter oben geschilderten Tests verwendet werden.

Weiterhin ist die Durchführung von Modultests bekannt, bei denen die Applikation, d.h. die Client-Software auf einem Test-PC oder in einer vergleichbaren Testumgebung implementiert ist und die Schnittstellen der Applikationssoftware mit den unterliegenden Modulen eines Endgerätes simuliert wird. Derartige Modultests können nicht oder nur unzureichend das Auftreten von Situationen simulieren, wie sie beispielsweise bei einem Endgerät im Realbetrieb auftreten. Beispiele hierfür sind die bereits erwähnten, typischen Störungen von Datenübertragungen über die Luftschnittstelle eines Mobilfunknetzes sowie die daraus resultierenden internen Zustände eines Mobilfunkendgerätes.

Ferner sind spezielle Testeinrichtungen für Telekommunikationsendgeräte bekannt. Diese sind ausgebildet, um die Schnittstellen zu simulieren, die zur Anbindung des Telekommunikationsendgerätes an das TK-Netz dienen. Solche Testeinrichtungen können auch als virtuelle Endgeräte dienen, die entsprechende Nachrichten an real existierende Netzknoten eines Betriebsnetzes bzw. Testnetzes zur Weiterleitung an das zu testende Endgerät senden.

Derartige Testeinrichtungen, die hier ebenfalls unter den Begriff der Telekommunikations(TK)-Testeinrichtungen fallen sollen, bestehen aus dedizierter Hardware, auf der speziell für diese Hardware angepasste Software abläuft. Hardware und Software werden als Einheit ausgeliefert. Für den Test von Mobilfunkendgeräten umfasst die Hardware beispielsweise eine RF- bzw. HF-Einheit, um die Luftschnittstelle eines Mobilfunknetzes zu simulieren. Die Software umfasst Testfälle zum Testen der telekommunikationsspezifischen Funktionalität des Endgerätes. Die Testeinrichtung erstellt und versendet entsprechende Telekommunikations-Übermittlungsnachrichten an das Endgerät (bzw. empfängt entsprechende Nachrichten von dem zu testenden Endgerät). Diese Übermittlungsnachrichten testen insbesondere die telekommunikationsspezifischen Protokollschichten unterhalb der Anwendungsschicht, d.h. bis hin zur Schicht 3 (bezogen auf das ISO/OSI-Schichtenmodell). Zum Beispiel könnte sich eine derartige Telekommunikations-Übermittlungsnachricht für die GPRS-Luftschnittstelle Um über den Protokollstack MAC-RLC-LLC-SNDCP erstrecken.

Zum Testen von Applikationen sind die zuvor beschriebenen TK-Testeinrichtungen weiterhin mit entsprechender Software ausgerüstet, um Applikations-Testnachrichten zu erzeugen. Für solche Tests werden beispielsweise über eine IP-Protokollschicht applikationsspezifische Daten übertragen (d.h. in den Schichten 4-7 des ISO/OSI-Modells). Solche Applikations-Testnachrichten werden dann in die vorstehend geschilderten Telekommunikations-Übermittlungsnachrichten eingefügt und über die simulierte Schnittstelle drahtlos oder drahtgebunden an das zu testende Endgerät übertragen. Dort wird (bei korrekter Funktion) die Applikations-Testnachricht aus der TK-Übermittlungsnachricht entnommen und die applikationsspezifischen Daten werden der implementierten Applikation übergeben.

Eine derartige Testeinrichtung ist (als "all-in-one"-Gerät) meist auch zur Auswertung von Tests ausgebildet, d.h. zur Auswertung von Antwortnachrichten, die vom zu testenden Endgerät in Reaktion auf eine TK-Übermittlungsnachricht und/oder eine Applikations-Testnachricht empfangen werden. Hierzu verfügen diese Geräte entweder über einen eingebauten Bildschirm zur Ausgabe der Testergebnisse oder über eine Schnittstelle, um die Testergebnisse an externe Einrichtungen wie Bildschirme, Drucker und dergleichen Ausgabegeräte auszugeben.

Während relativ einfache TK-Testeinrichtungen nur die Software zur Durchführung von Testfällen enthalten, die die grundlegenden, telekommunikationsspezifischen Funktionalitäten eines Endgerätes abdecken, sind in High-End-Testeinrichtungen eine Vielzahl von Testfällen implementiert, die zur Verifikation von mehreren Applikationen erforderlich sind. Diese Testfälle umfassen also mindestens die für die Applikationen vorgeschriebenen Testfälle. Darüberhinaus sollte die Möglichkeit bestehen, dass der Tester eigene Testfälle entwickeln und über die Testeinrichtung durchführen kann.

Solche dedizierten TK-Testeinrichtungen sind also komplex aufgebaut und damit teuer. Gleiches gilt für die damit durchgeführten Applikationstests. Häufig will der Tester die gleiche Applikation über unterschiedliche Schnittstellen ansprechen; beispielsweise soll ein Endgerät über die simulierte Luftschnittstelle und ein baugleiches Endgerät über ein reales oder Testnetzwerk angesteuert werden. Hierzu benötigt der Tester eine Mehrzahl von TK-Testeinrichtungen. Soll eine Mehrzahl von Applikationstests gleichzeitig mit einer Mehrzahl von Endgeräten durchgeführt werden, ist auf jeden Fall eine entsprechende Anzahl an TK-Testeinrichtungen erforderlich.

Selbst wenn die TK-Testeinrichtungen über abgesetzte Bedienerterminals angesteuert werden können, ist die Durchführung beispielsweise von parallelen Tests ein und derselben Applikation auf einer Mehrzahl von Endeinrichtungen aufwändig, da weiterhin jedes Endgerät von seiner eigenen, ihm speziell zugeordneten Testeinrichtung angesteuert wird. Somit muss der Tester den Testablauf in jeder TK-Testeinrichtung gesondert anstoßen und die Testdurchführung steuern, sowie die Testergebnisse von jeder Testeinrichtung einzeln abrufen und auswerten.

Die Aufgabe der Erfindung besteht daher darin, ein Verfahren zum Testen einer Applikation für ein Telekommunikationsendgerät anzugeben, das die Durchführung solcher Tests auf einfachere und flexiblere und damit kostengünstigere Weise als bisher ermöglicht, sowie eine entsprechende Testeinrichtung vorzuschlagen.

Diese Aufgabe wird durch ein Verfahren mit den Merkmalen des Anspruchs 1 sowie eine Applikations-Testeinrichtung mit den Merkmalen des Anspruchs 14 gelöst.

Ein wesentlicher Gedanke der Erfindung besteht darin, zwischen den oberen (i. w. ≥ L4) und den unteren Protokollschichten der Testnachrichten zu unterscheiden. Nur über die oberen Protokollschichten verläuft der eigentliche Applikationstest. Die unteren Schichten dienen nach dem Stand der Technik zur Übertragung der Applikations-Testnachricht über die (simulierte) Luftschnittstelle zum Endgerät bzw. zur Applikation, um die Testnachricht zu vervollständigen und den Test damit erst möglich zu machen. Die Definition von "unteren Protokollschichten" soll Tunnel einschließen, bspw. IP- oder HTTP-Tunnel, die dem Fachmann bekannt sind, obwohl etwa HTTP kein L3-Protokoll ist.

Von der dem Fachmann selbstverständlichen Vorstellung, dass die oberen und die unteren Protokollschichten die Schnittstelle zum Endgerät / zur Applikation nachzubilden haben, löst sich die Erfindung; und zwar mit dem Gedanken, für die unteren Protokollschichten andere als nur die telekommunikationsspezifischen Übertragungsmechanismen vorzusehen. Mit dieser Idee wird es denkbar, die eigentliche Applikations-Testnachxicht nicht nur zwischen Testeinrichtung und Endgerät, sondern auf überraschend einfache Weise auch zwischen Testeinrichtungen zu übermitteln. Hierdurch wiederum wird es erst möglich, eine von einer Telekommunikations-Testeinrichtung abgesetzte Applikations-Testeinrichtung zu schaffen.

Konkret wird gemäß der Erfindung ein Verfahren zum Testen einer Applikation für ein Telekommunikationsendgerät, insbesondere ein Mobilfunkendgerät, vorgeschlagen, bei dem
- in einer Applikations-Testeinrichtung zu Testzwecken eine Applikations-Testnachricht gemäß applikationsspezifischen Protokollen erzeugt wird,
- die Applikations-Testnachricht von einem Übermittlungsmodul der Applikations-Testeinrichtung in eine LAN/WAN-Übermittlungsnachricht gemäß LAN/WAN-Protokollen für eine Datenübermittlung zwischen abgesetzten Einrichtungen eingefügt wird,
- die LAN/WAN-Übermittlungsnachricht von der Applikations-Testeinrichtung über eine LAN/WAN-Verbindung an eine von der Applikations-Testeinrichtung abgesetzte Telekommunikationsendgerät-Testeinrichtung übermittelt wird,
- die Applikations-Testnachricht in der Telekommunikationsendgerät-Testeinrichtung aus der LAN/WAN-Übermittlungsnachricht entnommen wird,
- die Applikations-Testnachricht von der Telekommunikationsendgerät-Testeinrichtung in eine Telekommunikations-Übermittlungsnachricht gemäß Übermittlungsprotokollen für eine Telekommunikations-Datenübermittlung eingefügt wird,
- die Telekommunikations-Übermittlungsnachricht von der Telekommunikationsendgerät-Testeinrichtung über eine Telekommunikations-Datenübermittlungsverbindung an eine Applikationsumgebung übermittelt wird, in welche die Applikation eingebettet ist,
- die Applikations-Testnachricht von der Applikationsumgebung aus der Telekommunikations-Übermittlungsnachricht entnommen und an die Applikation übergeben wird.

Applikationsumgebungen sollen hier sowohl TK-Endgeräte als auch Testumgebungen zum Test von zur Implementation auf einem TK-Endgerät vorgesehenen Applikationen einschließen.

Durch die Trennung zwischen Applikations-Testeinrichtung und TK-Testeinrichtung ist die Durchführung von einem oder einer Mehrzahl von Tests flexibler möglich. Die Applikations-Testeinrichtung kann vorteilhaft zur Ansteuerung einer Mehrzahl von TK-Testeinrichtungen verwendet werden. Damit vereinfachen sich Applikationstests, die auf derselben Konfiguration der Applikation bzw. der entsprechenden Protokollschichten beruhen. Es ist auch in den Fällen nur eine Applikations-Testeinrichtung notwendig, in denen derselbe Applikationstest über unterschiedliche Schnittstellen zum Endgerät / zur Applikation durchzuführen ist.

Nach wie vor wird für die Durchführung von Applikationstests in der Regel eine Telekommunikations-Testeinrichtung pro Endgerät vorzusehen sein, sei es eine dedizierte Einrichtung oder ein Knoten eines TK-Netzes. Jedoch werden diese TK- Testeinrichtungen nur noch für die Übermittlung der Applikations-Testnachricht an das Endgerät benötigt. Die komplexe Funktionalität dedizierter TK-Testeinrichtungen, die speziell für den Applikationstest ausgebildet sind, kann somit entfallen.

Bei einer Ausgestaltung des erfindungsgemäßen Verfahrens umfassen die LAN/WAN-Protokolle solche Protokolle, die spezifisch für die Datenübermittlung an die Telekommunikationsendgerät-Testeinrichtung vorgesehen sind. Hierdurch können weitere Protokollumsetzer zur Übermittlung der LAN/WAN-Übermittlungsnachricht entfallen.

In weiteren Ausführungsformen des Verfahrens wird die Telekommunikationsendgerät-Testeinrichtung vom Übermittlungsmodul in der Applikations-Testeinrichtung in Bezug auf die Weiterleitung der Applikations-Testnachricht an die Applikationsumgebung über die LAN/WAN-Übermittlungsnachrichten angesteuert. Somit erfolgt vorteilhaft die Steuerung der TK-Testeinrichtung mindestens teilweise über die Applikations-Testeinrichtung, so dass etwa ein manuelles Bedienen der TK-Testeinrichtung überflüssig wird.

In weiteren Ausgestaltungen des erfindungsgemäßen Verfahrens ist in der Applikations-Testeinrichtung eine Mehrzahl von Übermittlungsmodulen vorgesehen. Jedes der Übermittlungsmodule ist zur Erzeugung von LAN/WAN-Übermittlungsnachrichten an jeweils eine Ausführung einer Mehrzahl von unterschiedlichen Ausführungen von Telekommunikationsendgerät-Testeinrichtungen angepasst. Vor der Einfügung der Applikations-Testnachricht wird das Übermittlungsmodul aus der Mehrzahl von Übermittlungsmodulen anhand der Telekommunikationsendgerät-Testeinrichtung, an welche die eingefügte Applikations-Testnachricht zu übermitteln ist, ausgewählt. Hierdurch kann die Durchführung von Tests flexibel an die vorhandenen TK-Testeinrichtungen angepasst werden. Umgekehrt ist nur eine Applikations-Testeinxichtung für eine Mehrzahl von Tests erforderlich, die auch parallel oder quasi-parallel durchgeführt werden können.

In einer weiteren Ausgestaltung dieser Ausführungsform umfasst jeweils eine der Telekommunikationsendgerät-Testeinrichtungen folgendes:
a) ein Übermittlungsmodul, beispielsweise eine HF-Einheit, in der Telekommunikationsendgerät-Testeinrichtung, um die Applikations-Testnachricht an die in dem Telekommunikationsendgerät implementierte Applikation zu übertragen, wobei die Telekommunikations-Übermittlungsnachricht gemäß Telekommunikationsprotokollen für die Übermittlung über eine Telekommunikationsschnittstelle, beispielsweise eine Luftschnittstelle eines Mobilfunkstandards, an das Telekommunikationsendgerät erstellt wird, oder
b) eine Netzeinrichtung eines Telekommunikationsnetzes, beispielsweise MSC, SGSN oder BSC/PCU eines GSM/GPRS-Netzes, wobei das Telekommunikationsnetz ein im Betrieb befindliches Netz oder ein Testnetz ist, oder
c) eine Testumgebung, in welche die Applikationsumgebung eingebettet ist, um die Applikation zu testen, bevor diese auf dem Telekommunikationsendgerät implementiert wird.

Somit kann das erfindungsgemäße Verfahren mit einer Applikations-Testeinrichtung zusammen mit den aufgezählten TK-Testeinrichtungen eingesetzt werden, so dass die entsprechenden, häufig vorkommenden Testfallszenarien auf einfache Weise abgedeckt werden können.

Bei einer weiteren Ausgestaltung der vorgenannten Ausführungsform umfasst in dem oder jedem Fall a) das entsprechende Übermittlungsmodul in der Applikations-Testeinrichtung einen Treiber für die Telekommunikationsendgerät-Testeinrichtung. Somit kann der Einsatz einer bestimmten Applikations-Testeinrichtung bzw. einer bestimmten TK-Testeinrichtung für das erfindungsgemäße Verfahren auf einfache Weise dadurch erreicht werden, dass in der Applikations-Testeinrichtung für die TK-Testeinrichtung ein Treiber bereitgestellt wird.

Bei weiteren Ausführungsformen des erfindungsgemäßen Verfahrens wird eine Mehrzahl gleich oder unterschiedlich ausgebildeter Applikations-Testnachrichten parallel an eine Mehrzahl von Übermittlungsmodulen übergeben. Diese erzeugen jeweils eine LAN/WAN-Übermittlungsnachricht und übermitteln diese an die jeweils zugeordnete Telekommunikationsendgerät-Testeinrichtung. Somit kann in kurzer Zeit ein bestimmter Applikationstest bspw. im Labor an unterschiedlichen Endgeräten und/oder im Feld durchgeführt werden, wobei über die Verwendung ein und derselben Applikations-Testeinrichtung auf einfache Weise sichergestellt ist, dass die Konfiguration des Applikationstests die gleiche ist. Ebenso können auch unterschiedliche Applikationstests parallel durchgeführt werden, wobei sich die Durchführung und Auswertung der Tests für den Tester dadurch erleichtert, dass er nur eine Applikations-Testeinrichtung bedienen muss.

In weiteren Ausführungsformen des erfindungsgemäßen Verfahrens erstellt die Applikation in Reaktion auf die Applikations-Testnachricht eine Applikations-Antwortnachricht, die an die Applikations-Testeinrichtung zurückübermittelt und dort ausgewertet wird. Hierdurch sind vorteilhaft komplexere Testabläufe mit einfachem oder mehrfachem Nachrichtenaustausch zwischen Applikation bzw. Endgerät und Applikations-Testeinrichtung möglich.

Bei einer weiteren Ausgestaltung dieser Ausführungsform liegt in der Applikations-Testeinrichtung ein Gateway, beispielsweise ein WAP-Gateway, und/oder ein Webserver vor, um die Applikations-Antwortnachricht zu empfangen. Bei einer weiteren Ausgestaltung wird die Applikations-Testnachricht vom Webserver gesendet. Hierdurch sind vorteilhaft realitätsnahe Testabläufe möglich, bei denen bspw. die Applikation als Client-Anwendung auf den Webserver zugreift und/oder Daten über das WAP-Gateway abruft.

In bevorzugten Ausführungsformen des erfindungsgemäßen Verfahrens umfassen die LAN/WAN-Protokolle das HTTP-Protokoll, um die Applikations-Testnachricht und/oder die Applikations-Antwortnachricht zwischen der Applikations-Testeinrichtung und der Telekommunikations-Testeinrichtung über einen HTTP-Tunnel zu übermitteln. Die Einkapselung der Applikations-Testnachricht und ggf. der Antwortnachricht in den Tunnel gestaltet die Übermittlung der Nachrichten besonders flexibel. So können zwischen Applikations- und Testeinrichtung bspw. Firewalls platziert werden, wenn die Verbindung zwischen beiden über ein ungesichertes Netz verläuft.

In besonders bevorzugten Ausführungsformen des erfindungsgemäßen Verfahrens umfassen die applikationsspezifischen Protokolle die WAP-Protokollsuite, SMS-C, OMA DRM, TCP und/oder SIP. Hierdurch ist vorteilhaft eine Testdurchführung für Applikationen wie SMS, MMS, E-Mail-Behandlung, DRM möglich.

Bei weiteren Ausführungsformen des erfindungsgemäßen Verfahrens wird die Applikations-Testeinrichtung über eine abgesetzte Steuereinrichtung gesteuert, beispielsweise ein Bedienerterminal. Hierdurch kann der Tester vorteilhaft in flexibler Weise die Durchführung eines Testfalles oder mehrerer Testfälle steuern.

Die Vorteile und Zweckmäßigkeiten der erfindungsgemäßen Applikations-Testeinrichtung ergeben sich aus den Vorteilen und Zweckmäßigkeiten der erfindungsgemäßen Verfahren. Eine erfindungsgemäße Applikations-Testeinrichtung zur Durchführung des erfindungsgemäßen Verfahrens weist die folgenden Komponenten auf:
- ein Erzeugungsmodul zur Erzeugung einer Applikations-Testnachricht gemäß applikationsspezifischen Protokollen, und
- ein Übermittlungsmodul, das ausgebildet ist, um eine LAN/WAN-Übermittlungsnachricht zu erzeugen, die gemäß LAN/WAN-Protokollen für eine Datenübermittlung zwischen abgesetzten Einrichtungen gebildet ist, und um die Applikations-Testnachricht in die LAN/WAN-Übermittlungsnachricht einzufügen, und um die LAN/WAN-Übermittlungsnachricht über eine LAN/WAN-Verbindung an eine von der Applikations-Testeinrichtung abgesetzte Telekommunikationsendgerät-Testeinrichtung zu übertragen.

Bei einer bevorzugten Ausführungsform der erfindungsgemäßen Applikations-Testeinrichtung ist das Übermittlungsmodul ausgebildet, um bei der Erzeugung der LAN/WAN-Übermittlungsnachricht solche Protokolle heranzuziehen, die spezifisch für die Datenübermittlung an die Telekommunikationsendgerät-Testeinrichtung vorgesehen sind. Bei weiteren Ausgestaltungen umfasst das Übermittlungsmodul einen Treiber für die Telekommunikationsendgerät-Testeinrichtung.

Weitere Ausführungsformen erfindungsgemäßer Applikations-Testeinrichtungen weisen eine Mehrzahl von Übermittlungsmodulen auf, wobei jedes der Übermittlungsmodule zur Erzeugung von LAN/WAN-Übermittlungsnachrichten an jeweils eine einer Mehrzahl von unterschiedlichen Telekommunikationsendgerät-Testeinrichtungen ausgebildet ist.

Bei einer bevorzugten Ausgestaltung dieser Ausführungsformen liegt in der Applikations-Testeinrichtung ein Auswahlmodul vor, und zwar zum Auswählen eines Übermittlungsmoduls aus der Mehrzahl von Übermittlungsmodulen anhand der Telekommunikationsendgerät-Testeinrichtung, an welche die eingefügte Applikations-Testnachricht zu übermitteln ist.

Weitere Ausführungsformen erfindungsgemäßer Applikations-Testeinrichtungen weisen ein Auswertungsmodul auf, um eine von der Applikation in Reaktion auf die Applikations-Testnachricht erzeugte und zurückübermittelte Applikations-Antwortnachricht auszuwerten.

Weitere Ausführungsformen erfindungsgemäßer Applikations-Testeinrichtungen weisen ein Gateway, beispielsweise ein WAP-Gateway, und/oder einen Webserver auf.

Bei weiteren Ausführungsformen erfindungsgemäßer Applikations-Testeinrichtungen ist das Erzeugungsmodul ausgebildet, um Funktionalitäten des Webservers zur Erstellung der Applikations-Testnachricht heranzuziehen.

Weitere Aspekte, Vorteile und Zweckmäßigkeiten der Erfindung ergeben sich aus der nachfolgenden detaillierten Beschreibung von Ausführungsbeispielen der Erfindung mit Bezugnahme auf die beigefügten Zeichnungen, von denen zeigt:
- Fig. 1: eine schematische Darstellung eines Testsystems für Applikationstests mit einer erfindungsgemäßen Applikations-Testeinrichtung;
- Fig. 2: in Form einer schematischen Topologie die Verbindung der Applikations-Testeinrichtung der Fig. 1 mit einem der zu testenden Endgeräte;
- Fig. 3: ein funktionales Blockschaltbild eines Teils der Applikations-Testeinrichtung der Fig. 1, 2;
- Fig. 4: ein funktionales Blockschaltbild eines weiteren Teils der Applikations-Testeinrichtung der Fig. 1-3.

In den Figuren sind gleiche und gleichwirkende Elemente mit gleichen Bezugszeichen versehen.

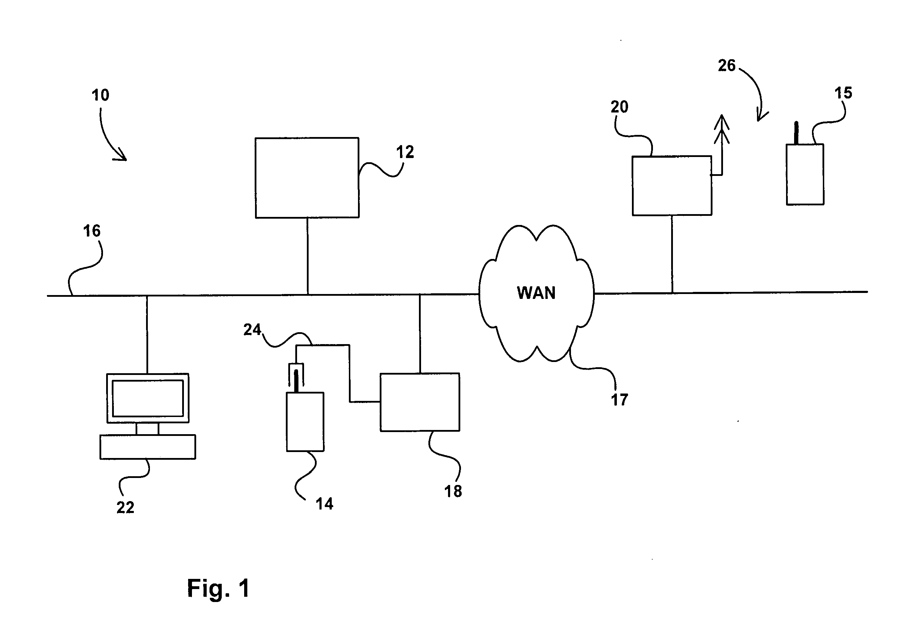

Fig. 1 zeigt den Aufbau eines Testsystems 10. Eine erfindungsgemäß ausgebildete Applikations-Testeinrichtung 12 ist für den Test von Applikationen vorgesehen, die auf Mobilfunkendgeräten 14, 15 implementiert sind. Die Testeinrichtung 12 ist über ein Bussystem 16, 17 mit einer Telekommunikations-Testeinrichtung 18 und Netzeinrichtungen 20 eines Mobilfunknetzes verbunden, nämlich SGSN und BSS eines GPRS-Mobilfunknetzes, die jedoch als ein einziger Knoten schematisch dargestellt sind. Die Applikations-Testeinrichtung 12 wird durch ein Bedienerterminal 22 angesteuert. Hierbei handelt es sich um den PC eines Testers, der sich in seinem Büro befindet.

Bei dem Bussystem handelt es sich um ein LAN 16 und ein WAN 17. Die Applikations-Testeinrichtung 12 befindet sich in einem Gebäude mit einem Testlabor, in dem die TK-Testeinrichtung 18 betrieben wird. Das WAN 17 beinhaltet Netzstrukturen, die dem Fachmann aus dem Internet-Umfeld zur Anbindung geographisch voneinander entfernter Einrichtungen wohlbekannt sind. Beim GPRS-System 20 handelt es sich um ein Testnetz zum Testen des Mobilfunkendgerätes 15. Es könnte sich jedoch auch um ein Life Network, also ein im realen Betrieb befindliches Netz, handeln.

Die erfindungsgemäße Applikations-Testeinrichtung 12 ist über das LAN/WAN 16, 17 mit zwei Endgeräten 14, 15 zum Test der auf diesen implementierten Applikationen verbunden. Die Testeinrichtung 12 kann jedoch ohne weiteres auch mit nur einem oder einer größeren Anzahl von Endgeräten verbunden werden. So kann beispielsweise eine Applikations-Testeinrichtung mit drei oder vier TK-Testeinrichtungen verbunden werden, die etwa in einem Testlabor betrieben werden. Somit kann eine Applikation im Laborsystem parallel auf einer Mehrzahl unterschiedlicher Endgeräte getestet werden. Gleichzeitig kann dieselbe Applikations-Testeinrichtung mit einer Mehrzahl von Test- /Realbetriebsnetzen verbunden sein, um etwa die Applikation im unmittelbaren Zusammenhang mit den im Labor durchgeführten Tests auch im Netzumfeld zu testen.

Die TK-Testeinrichtung 18 ist über eine Kabelverbindung 24 zur Simulation der Luftschnittstelle mit dem Endgerät 14 verbunden, wie dies dem Fachmann bekannt ist. Die Verbindungen 26 zwischen Basisstation bzw. TK-Testeinrichtung 18 und den zu testenden Endgeräten 14 ist in mobilfunkspezifischer Weise ausgebildet. Erfindungsgemäß werden Applikations-Testnachrichten von der Applikations-Testeinrichtung 12 in Richtung auf die Endgeräte 14 in der Weise übermittelt, dass die Applikationsdaten über das LAN/WAN 16, 17 mittels LAN/WAN-Übermittlungsnachrichten an die TK-Testeinrichtungen 18, 20 übermittelt werden. Hier werden die Applikationsdaten in Mobilfunk-Übermittlungsnachrichten eingefügt und über die Verbindungen 24, 26 an das Endgerät 14, 15 gesendet. Die Übermittlung von Applikations-Antwortnachrichten von den Endgeräten 14, 15 zum Applikations-Testgerät 12 erfolgt in analoger Weise.

Zur Steuerung der Applikations-Testeinrichtung 12 verfügt der Bediener-PC 22 über eine graphische Bedienoberfläche. Ebenso könnte auch ein Terminalprogramm auf dem PC 22 laufen. Die Steuerungsdaten werden über das LAN 16 übermittelt.

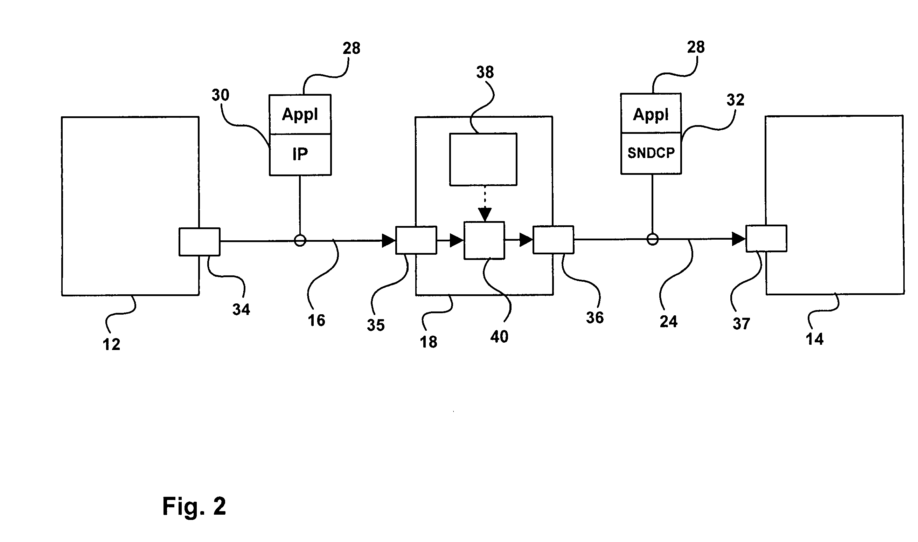

Fig. 2 gibt als Beispiel eine detailliertere Übersicht über die Übertragung einer Applikations-Testnachricht 28 von der Applikations-Testeinrichtung 12 der Fig. 1 über die Telekommunikations-Testeinrichtung 18 an das Mobilfunkendgerät 14.

Die Applikations-Testnachricht 28 beinhaltet diejenigen Daten, die in den oberen, applikationsspezifischen Protokollschichten zwischen den Einrichtungen bzw. Geräten übertragen werden, d.h. insbesondere die Protokollschicht ab Schicht 4 gemäß dem ISO/OSI-Modell (vgl. hierzu die beispielhafte Darstellung in der nachfolgenden Figur). Über das LAN 16 verläuft ein erster Verbindungsast zwischen den Testeinrichtungen 12 und 18. Hier wird die Applikations-Testnachricht 28 eingebettet in eine LAN-Übermittlungsnachricht 30 übertragen. Die Nachricht 30 ist gemäß Datentransportprotokollen gebildet, wie sie in LANs bekanntermaßen für den Datentransport verwendet werden. In dem hier geschilderten Beispiel wird die Applikations-Testnachricht 28 über IP von der Einrichtung 12 an die Einrichtung 18 übermittelt.

Von der Mobilfunk-Testeinrichtung 18 wird die Applikations-Testnachricht 28 über mobilfunkspezifische Transportprotokolle an die Endeinrichtung 14 übermittelt. Bei dem hier geschilderten Beispiel wird über die Verbindung 24 die GPRS-Luftschnittstelle simuliert. Somit beinhalten die Transportprotokolle 32 die Protokolle LLC-SNDCP.

Die Übertragung über die TK-Testeinrichtung 20 an das Endgerät 15 verläuft analog.

Allerdings wird zur Übertragung über das WAN 17 ein HTTP-Tunnel zwischen HTTP-Einrichtungen (in den Figuren 1 und 2 nicht gezeigt) eingerichtet, die den Einrichtungen 12, 20 zugeordnet sind. Zwar handelt es sich bei HTTP nicht um ein Schicht-3-Protokoll. Da der HTTP-Tunnel jedoch zum Transport der Applikations-Testnachricht zwischen den Einrichtungen dient, wird dieser Mechanismus hier als Schicht-3-Protkollmechanismus angesehen.

In der Fig. 2 sind in den Einrichtungen 12, 18, 14 die jeweiligen Sende-/Empfangseinheiten mit den Bezugsziffern 34 - 37 angedeutet. Die Sendeeinheit 34 der Applikations-Testeinrichtung 12 ist eine handelsübliche Ethernet-Schnittstellenkarte. Allgemein kann es sich jedoch um eine beliebige Einheit zur Übermittlung von Daten über LAN/WAN-Netze handeln. Gleiches gilt für die Empfangseinheit 35 der Telekommunikations-Testeinrichtung 18. Herkömmliche Testeinrichtungen dieser Art verfügen über Netzwerkanbindungen, um beispielsweise Informationen über Testabläufe und Testergebnisse auf externe Anzeigebildschirme ausgeben zu können. Die Mobilfunk-Testeinrichtung 18 verfügt weiter über eine Sendeeinheit 36, nämlich eine HF-Einheit mit Kabelverbindung 24 zur Übermittlung von Nachrichten an das Endgerät 14.

Herkömmlich werden Applikationstests von der TK-Testeinrichtung 18 ausgehend gesteuert, die hierfür über ein Applikations-Teststeuerungsmodul 38 verfügt. Das Modul 38 stößt dabei die Erzeugung einer Applikations-Testnachricht im NachrichtenErzeugungsmodul 40 an. Dieses erzeugt die gewünschte Applikations-Testnachricht und übergibt diese an die HF-Einrichtung 36. Im Gegensatz zu diesem herkömmlichen Ablauf wird die Applikations-Testnachricht 28 von der Applikations-Testeinrichtung 12 an das Nachrichtenerzeugungsmodul 40 übergeben. Dem Fachmann ist ersichtlich, dass hierfür nur minimale oder gar keine Modifikationen an der Testeinrichtung 18 erforderlich sind. Diese kann also ohne weiteres zusammen mit der erfindungsgemäßen Testeinrichtung 12 verwendet werden.

Die Empfangseinheit 37 des Mobilfunkendgerätes 14 ist zum Empfang von Nachrichten 32 mit eingebetteten Applikationsdaten 28 über die Luftschnittstelle 26 in herkömmlicher Weise ausgebildet.

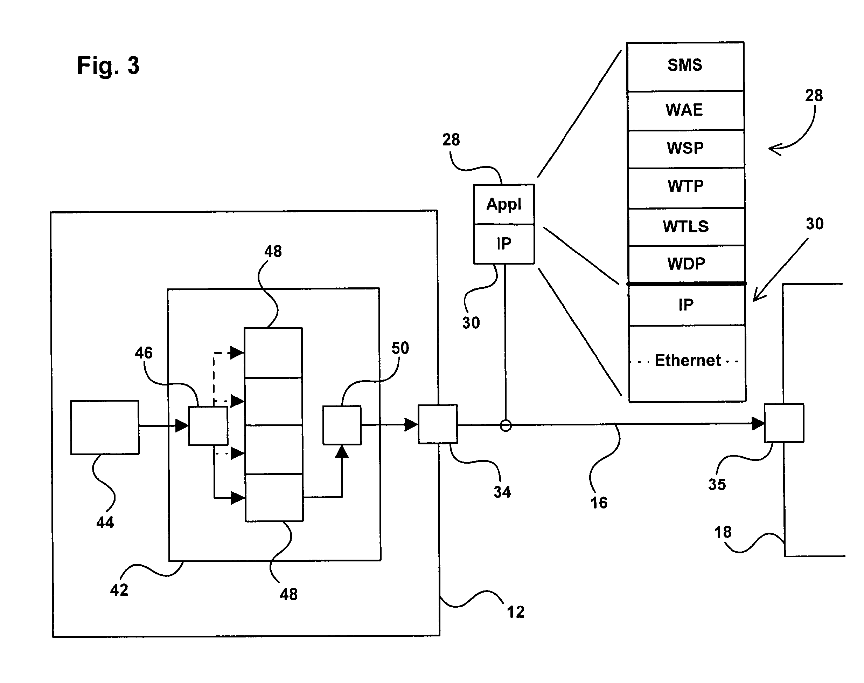

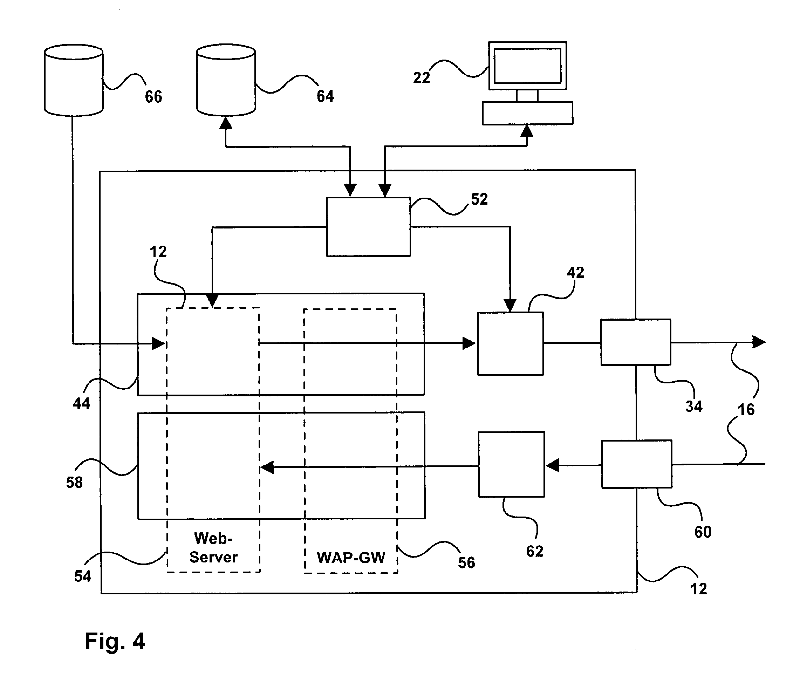

In der Fig. 3 ist die Übermittlung der Applikations-Testnachricht 28 über das LAN 16 zwischen der erfindungsgemäßen Applikations-Testeinrichtung 12 und der TK-Testeinrichtung 18 nochmals detaillierter dargestellt. Die Applikations-Testeinrichtung 12 verfügt erfindungsgemäß über ein Übermittlungsmodul 42, um die von einem Erzeugungsmodul 44 erzeugten Applikations-Testnachrichten für die Versendung über die Sendeeinheit 34 vorzubereiten. Die Erzeugung von Applikations-Testnachrichten wird in Fig. 4 genauer diskutiert. Hier wird zunächst die Arbeitsweise des Übermittlungsmoduls 42 genauer beschrieben.

Das Übermittlungsmodul 42 verfügt über eine Auswahleinheit 46, eine Mehrzahl von Ansteuerungseinheiten 48 sowie eine LAN-Einheit 50. Die Auswahleinheit 46 wird von einer Steuerung der Applikations-Testeinrichtung angesteuert wie dies weiter unten anhand der Fig. 4 genauer erläutert werden wird. In Reaktion auf die Ansteuerung wählt die Auswahleinheit 46 eine der Ansteuerungseinheiten 48 aus und übergibt dieser die in dem Erzeugungsmodul 44 erzeugte Applikations-Testnachricht.

In dem hier geschilderten Beispiel ist die ausgewählte Ansteuerungseinheit 48 ein Treiber für die Testeinrichtung 18. Der Treiber 48 fügt Steuerungsdaten zum Treiben der Testeinrichtung 18 zur Applikations-Testnachricht hinzu, um so die Testeinrichtung 18 anzusteuern. Diese wird durch die Treiber- bzw. Ansteuerungsinformationen veranlasst, die Applikations-Testnachricht 28 an das Mobilfunkendgerät 14 weiter zu leiten. Die mit Treiberdaten versehene Applikations-Testnachricht 28 wird sodann an die LAN-Einheit 50 übergeben. Hier werden die Daten zur Versendung über das LAN 16 in eine IP-Nachricht eingefügt. Diese wird schließlich vom Übermittlungsmodul 42 an die Sendeeinheit 34 übergeben und von dieser an die Testeinrichtung 18 gesendet.

In der Fig. 3 ist der Protokoll-Stack gezeigt, gemäß dem die LAN-Übermittlungsnachricht 30 und die darin eingefügte Applikations-Testnachricht 28 gebildet ist. Es handelt sich um eine SMS-Testnachricht, die mittels der WAP-Protokollsuite übergeben wird. Diese ist dem Fachmann als solche bekannt. Die LAN-Nachricht 30 basiert auf Ethernet und IP.

In der Fig. 3 sind vier Ansteuerungseinheiten 48 gezeigt, bei denen es sich um einen Treiber für die Testeinrichtung 18, einen weiteren Treiber für eine weitere, nicht gezeigte Testeinrichtung, eine Ansteuerung für die Gn- und eine Ansteuerung für die Gb-Schnittstelle des GPRS-Netzes 20 (zu einem SGSN bzw. einer BSS) handelt.

Zur Ansteuerung einer Mehrzahl von Mobilfunk-Testeinrichtungen, Festnetz-Testeinrichtungen oder auch Testumgebungen für Applikationen, die einem Modultest unterzogen werden sollen, verfügt das Übermittlungsmodul 42 allgemein über spezifisch zur Ansteuerung der entsprechenden TK-Testeinrichtung ausgebildete Ansteuerungseinheiten. Neben Treibern zur Ansteuerung dedizierter TK-Testeinrichtungen sind Ansteuerungseinheiten zur Übergabe von Applikations-Testnachrichten an Netzknoten des Testnetzes 20 sowie eines Realbetriebsnetzes (in Fig. 1 nicht eingezeichnet) vorgesehen, welche die Schnittstellen zu den Netzknoten der Mobilfunknetze simulieren.

Die Übermittlung von Applikations-Testnachrichten zwischen den Testeinrichtungen 12 und 18 muss nicht über ein drahtgestütztes LAN erfolgen, sondern kann auch über DECT oder Bluetooth erfolgen. Sind die Testeinrichtungen 12, 18 geografisch weiter voneinander entfernt, kann ein HTTP-Tunnel über ein WAN verlaufen, dass sich statt des LAN 16 in den Fig. 1-3 zwischen den Testeinrichtungen 12, 18 erstreckt. In diesem Falle kann sich an den Testeinrichtungen beispielsweise jeweils eine Firewall befinden, welche das jeweilige LAN gegen das dazwischen liegenden WAN abschirmt.

Weitere funktionale Einheiten der Applikations-Testeinrichtung 12 der Fig. 1 - 3 sind in der Fig. 4 gezeigt. Ein Tester bzw. Bediener steuert über das Terminal 22 eine interne Steuereinheit 52 der Testeinrichtung 12 an. Das Erzeugungsmodul 44 verfügt über einen gestrichelt angedeuteten Webserver 54 sowie ein WAP-Gateway 56. Jede der Komponenten 54, 56 ist als solche dem Fachmann bekannt.

Die schematische Darstellung der Fig. 4 ist so zu verstehen, dass Funktionalitäten eines Webservers und eines WAP-Gateways im Erzeugungsmodul 44 verwendet werden. Ein Auswertungsmodul 58 macht gleichfalls ebenfalls von Funktionalitäten des Webservers 54 sowie des WAP-Gateways 56 Gebrauch. Das Modul 58 ist ausgebildet, um über die Verbindung 16 eingehende Applikations-Antwortnachrichten auszuwerten. Die Antwortnachricht wird von einer Empfangseinheit 60 empfangen. Diese ist aus funktionalen Gründen getrennt von der Sendeeinheit 34 gezeichnet. Physikalisch handelt es sich um dieselbe Ethernet-Schnittstellenkarte. Die empfangene Nachricht wird an eine Protokolleinheit 62 weitergeleitet, die die für die Übermittlung über die Verbindung 16 erforderlichen LAN-Protokollschichten analysiert und die Applikations-Antwortnachricht entnimmt. Die Antwortnachricht wird sodann an das Auswertungsmodul 58 übergeben.

Die Erzeugung einer Nachricht in einem Webserver, um einem Benutzer Informationen beispielsweise über verfügbare Inhalte zukommen zu lassen (Push-Dienste), sowie die Erzeugung von WAP-Nachrichten, um derartige Informationen an ein Mobilfunkendgerät zu übermitteln, sind dem Fachmann bekannt und werden hier daher nicht weiter erläutert.

In Reaktion auf ein Kommando vom Bedienerterminal 22 liest die Steuereinheit 52 aus dem Testfallspeicher 64, in dem Testfälle in Form von Batch-Skripten abgelegt sind, und steuert die weiteren funktionalen Einheiten der Testeinrichtung 12 entsprechend den Kommandos des ausgelesenen Testfallskriptes an. Insbesondere übergibt die Steuereinheit 52 dem Webserver 54 eine Anweisung zur Erzeugung der Applikations-Testnachricht 28 (vgl. Fig. 2, 3). Diese soll unter anderem eine URL enthalten.

Der Webserver 54 erzeugt daraufhin die Testnachricht, die die URL enthält. Diese wird an das WAP-Gateway 56 übergeben und dort als SMS erstellt. Die Applikations-Testnachricht wird daraufhin, wie anhand der Fig. 3 beschrieben, von dem Übermittlungsmodul 42 zur Übermittlung über das LAN 16 vorbereitet und über die Sendeeinheit 34 an die Mobilfunk-Testeinrichtung 18 (vgl. Fig. 1-3) versendet.

Bei der Testnachricht handelt es sich um eine SMS, die über die simulierte Luftschnittstelle zum zu testenden Endgerät 14 als WAP-Push übermittelt wird. Eine MMS-Applikation, die auf dem Endgerät 14 implementiert ist, soll diese SMS in korrekter Weise interpretieren und in Reaktion auf den Empfang der SMS eine MMS-Anforderungsnachricht als Applikations-Antwortnachricht erzeugen. Diese wird an die in der SMS übermittelte URL geschickt. Hierzu wird vom Endgerät 14 (in Fig. 4 nicht gezeigt) eine WAP-Session zum WAP-Gateway 56 in der Testeinrichtung 12 aufgebaut.

Im Rahmen dieser Verbindung wird die MMS-Anforderungsnachricht (über WSP, vgl. Fig. 3) übermittelt. Die Antwortnachricht wird über die Einheiten 60 und 62 empfangen und an das WAP-Gateway 56 weiter geleitet. Dieses erzeugt daraufhin eine Anforderung an den Webserver 54, eine MMS an das zu testende Endgerät zu erstellen. Hierzu entnimmt der Webserver 54 einem Testdatenspeicher 66 die durch die URL bezeichnete Information, beispielsweise eine bildliche Darstellung im JPEG-Format.

Der Webserver 54 erzeugt aus diesen Daten eine MMS, die über das WAP-Gateway als weitere Applikations-Testnachricht an das zu testende Endgerät über die Einheiten 42 und 34 versendet wird. Bei korrekter Funktion der MMS-Applikation auf dem zu testenden Endgerät 14 sollte die empfangene MMS ausgelesen und in einem Speicher des Endgerätes zwischengespeichert werden. Insbesondere sollten keine Fehlermeldungen irgendwelcher Art zur Testeinrichtung 12 zurück gesendet werden.

Das Auswertungsmodul 58 überwacht die Funktionen des Webservers 54 und des WAP-Gateways 56, um die Dokumentation des Applikationstestes zu unterstützen. Beispielsweise wird der Empfang und die Weiterverarbeitung von Applikations-Antwortnachrichten sowie das Auftreten bzw. Nicht-Auftreten von Fehlermeldungen, die vom zu testenden Endgerät 14 eintreffen, erfasst. Dies ist in der Fig. 4 dargestellt. Ebenso wird auch schon die Erstellung und erfolgreiche Versendung einer Testnachricht überwacht. Die Überwachungsergebnisse werden vom Modul 58 an die Steuereinheit 52 zurückgegeben (in Fig. 4 aus Gründen der Übersichtlichkeit nicht eingezeichnet).

Die Steuereinheit 52 ist dazu ausgebildet, diese Protokollinformationen in dem Testfallspeicher 64 abzulegen. Aus diesem können sie durch ein Kommando, das am Bedienerterminal 22 eingegeben wird, ausgelesen und auf dem Anzeigeschirm des Bedienerterminals 22 ausgegeben werden.

Das Erzeugungsmodul 44 kann mit allen Ansteuerungseinheiten 48 des Übermittlungsmoduls 42 zusammenwirken. Insbesondere kann der gleiche Testablauf wie oben geschildert parallel bzw. quasiparallel über unterschiedliche Ansteuerungseinheiten durchgeführt werden, um etwa den gleichen Test im Labor und gleichzeitig im Feld durchführen zu können. Ein derartiges Szenario ist mit der erfindungsgemäßen Testeinrichtung 12 auf besonders einfache Weise möglich. Da das Erzeugungsmodul 44 zur Erzeugung der Applikations-Testnachricht identisch ist, entfallen Maßnahmen zur Gewährleistung bzw. Überprüfung der identischen Konfiguration einer Mehrzahl von Testeinrichtungen, wie sie bei bekannten Testsystemen notwendig sind.

Die Auswahl eines Treibers bzw. einer der Ansteuerungseinheiten 48 kann über das Benutzextexminal 22 auf besonders einfache Weise erfolgen, beispielsweise durch Anklicken von Bezeichnungen der anzusteuernden Mobilfunk-Testeinrichtungen.

Obwohl in den vorstehend geschilderten Ausführungsbeispielen der Test von Mobilfunkendgeräten und von auf diesen implementierten Applikationen beschrieben wurde, ist das erfindungsgemäße Verfahren und die erfindungsgemäße Applikations-Testeinrichtung genauso vorteilhaft für Modultests anwendbar, bei dem eine Applikation in einer Testumgebung auf einem Test-PC bzw. einer Test-Workstation implementiert ist. Die Applikations-Testnachricht wird nicht über eine (simulierte) Luftschnittstelle übertragen, sondern über die simulierte endgerät-interne Schnittstelle zur Applikation. Als TK-Testeinrichtung ist hier somit diese Schnittstelle bzw. die Testumgebung anzusehen.

In gleicher Weise wie hier geschildert können auch Festnetz-Telefone oder PDAs mit den auf diesen implementierten Zusatzdiensten bzw. Anwendungen getestet werden.

Das in dem Ausführungsbeispiel geschilderte WAP-Gateway und/oder der Webserver sind generell ausgebildet, um Nachrichten zu versenden und zu empfangen, wie dies dem Fachmann bekannt ist. Die Applikations-Testeinxichtung kann statt über ein abgesetztes Bedienerterminal ebenso auch über eine lokale Benutzerschnittstelle bedient werden. Liegt die Applikations-Testeinrichtung auf einem PC oder einer Workstation implementiert vor, so erfolgt die Bedienung über die Tastatur und die Ausgabe über die Anzeige des PCs/der Workstation.

Die hier dargestellten Anwendungsbeispiele stellen nur einige vorteilhafte Ausführungsformen der Erfindung dar. Darüber hinaus sind im Geltungsbereich der Erfindung, der ausschließlich durch die nachfolgenden Ansprüche angegeben wird, durch fachmännisches Handeln noch viele weitere Ausführungsformen denkbar.

### Bezugszeichenliste

- 10: Testsystem
- 12: Applikations-Testeinrichtung
- 14, 15: Mobilfunkendgeräte
- 16: LAN
- 17: WAN
- 18: Mobilfunk-Testeinrichtung
- 20: GPRS-Mobilfunknetz-
- 22: Bedienerterminal
- 24: simulierte Mobilfunk-Datenübermittlungsverbindung
- 26: Mobilfunk-Datenübermittlungsverbindung
- 28: Applikations-Testnachricht
- 30: LAN/WAN-Übermittlungsnachricht
- 32: Mobilfunk-Übermittlungsnachricht
- 34: Sendeeinheit der Applikations-Testeinrichtung
- 35: Empfangseinheit der Mobilfunk-Testeinrichtung
- 36: HF-Einheit der Mobilfunk-Testeinrichtung
- 37: Empfangseinheit des Mobilfunkendgerätes
- 38: Applikations-Teststeuerungsmodul
- 40: Nachrichtenerzeugungsmodul
- 42: Übermittlungsmodul
- 44: Erzeugungsmodul
- 46: Auswahleinheit
- 48: Ansteuerungseinheiten bzw. Treiber
- 50: LAN-Einheit
- 52: Steuereinheit
- 54: Webserver
- 56: WAP-Gateway
- 58: Auswertungsmodul
- 60: Empfangseinheit
- 62: Protokolleinheit
- 64: Testfallspeicher
- 66: Testdatenspeicher

## Patentansprüche

1. Verfahren zum Testen einer Applikation für ein Telekommunikationsendgerät (14, 15), insbesondere ein Mobilfunkendgerät, bei dem
- in einer Applikations-Testeinrichtung (12) zu Testzwecken eine Applikations-Testnachricht (28) gemäß applikationsspezifischen Protokollen erzeugt wird,
- die Applikations-Testnachricht (28) von einem Übetmittlungsmodul (42) der Applikations-Testeinrichtung (12) in eine LAN/WAN-Übermittlungsnachricht (30) gemäß LAN/WAN-Protokollen für eine Datenübermittlung zwischen abgesetzten Einrichtungen eingefügt wird,
- die LAN/WAN-Übermittlungsnachricht (30) von der Applikations-Testeinrichtung (12) über eine LAN/WAN-Verbindung (16, 17) an eine von der Applikations-Testeinrichtung (12) abgesetzte Telekommunikationsendgerät-Testeinrichtung (18, 20) übermittelt wird,
- die Applikations-Testnachricht (28) in der Telekommunikationsendgerät-Testeinrichtung (18, 20) aus der LAN/WAN-Übermittlungsnachricht (30) entnommen wird,
- die Applikations-Testnachricht (28) von der Telekommunikationsendgerät-Testeinrichtung (18, 20) in eine Telekommunikations-Übermittlungsnachricht (32) gemäß Übermittlungsprotokollen für eine Telekommunikations-Datenübermittlung eingefügt wird,
- die Telekommunikations-Übermittlungsnachricht (32) von der Telekommunikationsendgerät-Testeinrichtung (18) über eine Telekommunikations-Datenübermittlungsverbindung (24, 26) an eine Applikationsumgebung (14, 15) übermittelt wird, in welche die Applikation eingebettet ist,
- die Applikations-Testnachricht (28) von der Applikationsumgebung (14, 15) aus der Telekommunikations-Übermittlungsnachricht (32) entnommen und an die Applikation übergeben wird.

2. Verfahren nach Anspruch 1,
**dadurch gekennzeichnet, dass**
die LAN/WAN-Protokolle solche Protokolle umfassen, die spezifisch für die Datenübermittlung an die Telekommunikationsendgerät-Testeinrichtung (18, 20) vorgesehen sind.

3. Verfahren nach Anspruch 1 oder 2,
**dadurch gekennzeichnet, dass**
die Telekommunikationsendgerät-Testeinrichtung (18, 20) vom Übermittlungsmodul (42) in der Applikations-Testeinrichtung (12) in Bezug auf die Weiterleitung der Applikations-Testnachricht (28) an die Applikationsumgebung (14, 15) über die LAN/WAN-Übermittlungsnachrichten (30) angesteuert wird.

4. Verfahren nach einem der vorhergehenden Ansprüche,
**dadurch gekennzeichnet, dass**
im Übermittlungsmodul (42) eine Mehrzahl von Ansteuerungseinheiten (48) vorgesehen ist, wobei jede der Ansteuerungseinheiten (48) zur Erzeugung von LAN/WAN-Übermittlungsnachrichten (30) an jeweils eine Ausführung einer Mehrzahl von unterschiedlichen Ausführungen von Telekommunikationsendgerät-Testeinrichtungen (18) angepasst ist, und
vor der Einfügung der Applikations-Testnachricht (28) eine Ansteuerungseinheit aus der Mehrzahl von Ansteuerungseinheiten (48) anhand der Telekommunikationsendgerät-Testeinrichtung (18), an welche die eingefügte Applikations-Testnachricht (28) zu übermitteln ist, ausgewählt wird.

5. Verfahren nach Anspruch 4,
**dadurch gekennzeichnet, dass**
jeweils eine der Telekommunikationsendgerät-Testeinrichtungen (18) folgendes umfasst:
a) ein Sendemodul (36), beispielsweise eine HF-Einheit, in der Telekommunikationsendgerät-Testeinrichtung (18), um die Applikations-Testnachricht (28) an die in dem Telekommunikationsendgerät (14, 15) implementierte Applikation zu übertragen, wobei die Telekommunikations-Übermittlungsnachricht (32) gemäß Telekommunikationsprotokollen für die Übermittlung über eine Telekommunikationsschnittstelle, beispielsweise eine Luftschnittstelle eines Mobilfunkstandards, an das Telekommunikationsendgerät (14, 15) erstellt wird, oder
b) eine Netzeinrichtung (20) eines Telekommunikationsnetzes, beispielsweise MSC, SGSN oder BSC/PCU eines GSM/GPRS-Netzes, wobei das Telekommunikationsnetz ein im Betrieb befindliches Netz oder ein Testnetz ist, oder
c) eine Testumgebung, in welche die Applikationsumgebung eingebettet ist, um die Applikation zu testen, bevor diese auf dem Telekommunikationsendgerät (14, 15) implementiert wird.

6. Verfahren nach Anspruch 5,
**dadurch gekennzeichnet, dass**
in dem oder jedem Fall a) die entsprechende Ansteuerungseinheit (48) in der Applikations-Testeinrichtung (12) einen Treiber für die Telekommunikationsendgerät-Testeinrichtung (18) umfasst.

7. Verfahren nach einem der Ansprüche 4 bis 6,
**dadurch gekennzeichnet, dass**
eine Mehrzahl gleich oder unterschiedlich ausgebildeter Applikations-Testnachrichten parallel an eine Mehrzahl von Ansteuerungseinheiten (48) übergeben wird, die jeweils eine LAN/WAN-Übermittlungsnachricht erzeugen und diese an die jeweils zugeordnete Telekommunikationsendgerät-Testeinrichtung übermitteln.

8. Verfahren nach einem der vorhergehenden Ansprüche,
**dadurch gekennzeichnet, dass**
die Applikation in Reaktion auf die Applikations-Testnachricht (28) eine Applikations-Antwortnachricht erstellt, die an die Applikations-Testeinrichtung (12) zurückübermittelt und dort ausgewertet wird.

9. Verfahren nach Anspruch 8,
**dadurch gekennzeichnet, dass**
in der Applikations-Testeinrichtung (12) ein Gateway (56), beispielsweise ein WAP-Gateway, und/oder ein Webserver (54) vorliegen, um die Applikations-Antwortnachricht zu empfangen.

10. Verfahren nach Anspruch 9,
**dadurch gekennzeichnet, dass**
die Applikations-Testnachricht vom Webserver (54) gesendet wird.

11. Verfahren nach einem der vorhergehenden Ansprüche,
**dadurch gekennzeichnet, dass**
die LAN/WAN-Protokolle das HTTP-Protokoll umfassen, um die Applikations-Testnachricht (28) und/oder die Applikations-Antwortnachricht zwischen der Applikations-Testeinrichtung (12) und der Telekommunikations-Testeinrichtung (20) über einen HTTP-Tunnel zu übermitteln.

12. Verfahren nach einem der vorhergehenden Ansprüche,
**dadurch gekennzeichnet, dass**
die applikationsspezifischen Protokolle die WAP-Protokollsuite, SMS-C, OMA DRM, TCP und/oder SIP umfassen.

13. Verfahren nach einem der vorhergehenden Ansprüche,
**dadurch gekennzeichnet, dass**
die Applikations-Testeinrichtung (12) über eine abgesetzte Steuereinrichtung (22) gesteuert wird, beispielsweise ein Bedienerterminal.

14. Applikations-Testeinrichtung (12) zur Durchführung eines Verfahrens nach einem der vorhergehenden Ansprüche, mit
- einem Erzeugungsmodul (44) zur Erzeugung einer Applikations-Testnachricht (28) gemäß applikationsspezifischen Protokollen, und
- einem Übermittlungsmodul (42), das ausgebildet ist, um eine LAN/WAN-Übermittlungsnachricht (30) zu erzeugen, die gemäß LAN/WAN-Protokollen für eine Datenübermittlung zwischen abgesetzten Einrichtungen gebildet ist, und um die Applikations-Testnachricht (28) in die LAN/WAN-Übermittlungsnachricht (30) einzufügen, und
- einer Sendeeinheit (34), um die LAN/WAN-Übermittlungsnachricht (30) über eine LAN/WAN-Verbindung (16, 17) an eine von der Applikations-Testeinrichtung (12) abgesetzte Telekommunikationsendgerät-Testeinrichtung (18, 20) zu übertragen.

15. Applikations-Testeinrichtung nach Anspruch 14,
**dadurch gekennzeichnet, dass**
das Übermittlungsmodul (42) augebildet ist, um bei der Erzeugung der LAN/WAN-Übermittlungsnachricht (30) solche Protokolle heranzuziehen, die spezifisch für die Datenübermittlung an die Telekommunikationsendgerät-Testeinrichtung (18, 20) vorgesehen sind.

16. Applikations-Testeinrichtung nach Anspruch 14 oder 15,
**dadurch gekennzeichnet, dass**
das Übermittlungsmodul (42) einen Treiber (48) für die Telekommunikationsendgerät-Testeinrichtung (18) umfasst.

17. Applikations-Testeinrichtung nach einem der Ansprüche 14 bis 16,
**dadurch gekennzeichnet, dass**
das Übermittlungsmodul (42) eine Mehrzahl von Ansteuerungseinheiten (48) umfasst, wobei jede der Ansteuerungseinheiten (48) zur Erzeugung von LAN/WAN-Übermittlungsnachrichten (30) an jeweils eine einer Mehrzahl von unterschiedlichen Telekommunikationsendgerät-Testeinrichtungen (18, 20) ausgebildet ist.

18. Applikations-Testeinrichtung nach Anspruch 17,
**gekennzeichnet durch**
eine Auswahleinheit (46) zum Auswählen einer Ansteuerungseinheit aus der Mehrzahl von Ansteuerungseinheiten (48) anhand der Telekommunikationsendgerät-Testeinrichtung (18, 20), an welche die eingefügte Applikations-Testnachricht (28) zu übermitteln ist.

19. Applikations-Testeinrichtung nach einem der Ansprüche 14 bis 18,
**gekennzeichnet durch**
ein Auswertungsmodul (58), um eine von der Applikation in Reaktion auf die Applikations-Testnachricht (28) erzeugte und zurückübermittelte Applikations-Antwortnachricht auszuwerten.

20. Applikations-Testeinrichtung nach einem der Ansprüche 14 bis 19,
**gekennzeichnet durch**
ein Gateway (56), beispielsweise ein WAP-Gateway, und/oder einen Webserver (54).

21. Applikations-Testeinrichtung nach Anspruch 20,
**dadurch gekennzeichnet, dass**
das Erzeugungsmodul (44) ausgebildet ist, um Funktionalitäten des Webservers (54) zur Erstellung der Applikations-Testnachricht (28) heranzuziehen.
